# EUROPEAN PATENT APPLICATION

(11) **EP 4 800 967 A1**
(43) Date of publication of application: **02.09.2026**
(21) Application number: 25160936.8
(22) Date of filing: 28.02.2025
(51) Int. Cl.: H04L 9/08, H04L 9/14

(54) **TECHNIQUES FOR DETERMINING CRYPTOGRAPHIC KEY BANDWIDTH SHARES IN A MULTI-USER SCENARIO BY MEANS OF AN OPTIMIZATION**

(71) Applicant: Terra Quantum AG, 9000 St. Gallen (CH)
(72) Inventor: Kirsanov, Nikita, 9000 St. Gallen (CH); Ashurov, Abdufattokh, 9000 St. Gallen (CH); Zemlianov, Vladislav, 9000 St. Gallen (CH); Vinokur, Valerii, 9000 St. Gallen (CH)
(74) Representative: Lucke, Andreas

(57) **Abstract**

The disclosure relates to a method and a communication system for establishing a plurality of secret cryptographic keys shared between a sending unit and a plurality of receiving units, wherein the sending unit is connected to the plurality of receiving units by a plurality of communication channels. The method comprises transmitting, at the sending unit, a first sequence of electromagnetic signal pulses to a first receiving unit among the plurality of receiving units via a first communication channel among the plurality of communication channels for establishing a first cryptographic key shared between the sending unit and the first receiving unit, wherein each electromagnetic signal pulse of the first sequence of electromagnetic signal pulses corresponds to a bit of a first random bit sequence according to a key distribution protocol. The method further comprises transmitting, at the sending unit, a second sequence of electromagnetic signal pulses to a second receiving unit among the plurality of receiving units via a second communication channel among the plurality of communication channels for establishing a second cryptographic key shared between the sending unit and the second receiving unit, wherein each electromagnetic signal pulse of the second sequence of electromagnetic signal pulses corresponds to a bit of a second random bit sequence according to the key distribution protocol. The method further comprises determining a first key bandwidth share for the first sequence of electromagnetic signal pulses, and determining a second key bandwidth share for the second sequence of electromagnetic signal pulses, wherein the first key bandwidth share and the second key bandwidth share are determined by means of an optimization, wherein an optimization functional of the optimization depends on a user-selected distribution parameter that reflects a degree of uniformity in the amount of the first and second secret cryptographic keys shared with the first receiving unit and the second receiving unit, respectively.

## Description

### Technical Field

The disclosure relates to the field of quantum key distribution in a multi-user scenario.

### Background

Quantum key distribution (QKD) employs quantum resources for achieving provably secure communication between a sending unit (conventionally called Alice) and a receiving unit (conventionally called Bob), such that an eavesdropper (conventionally called Eve) tapping on the communication channel may at most receive a negligible amount of information.

In many scenarios it is desirable to establish secure communication in a multi-node topology, in which there is more than one sending unit and/or more than one receiving unit. US 7,430,295 B1 describes QKD techniques for establishing cryptographically secure connections between pairs of users in a multi-node network, using optical switches operated in a round-robin regime. US 8,885,828 B2 discloses a key management system built on pre-shared key distribution between all the users of a specific network subgroup in a switched optical star network.

A. Tayduganov et al., "Optimizing the deployment of quantum key distribution switch-based networks", Optics Express 29 (16) 24884, July 2021, describes the use of optical switches for distributing quantum cryptographic keys in a network consisting of eight nodes.

X. Tang et al., "Demonstration of an Active Quantum Key Distribution Network"; Quantum Communications and Quantum Imaging IV, vol. 6305, Proceedings SPIE 2006, pp. 29-34, describes a three-node QKD network that employs optical switches to establish one-to-any and any-to-any communication, comprising time alignment procedures.

### Overview

In general, the physical properties of the various communication channels linking the sending units and the receiving units in a multi-node topology may differ. In view of the prior art, what is needed is an improved scheme for allocating key generation and bandwidth resources when establishing quantum key distribution in a multi-user topology.

This objective is achieved with a method according to independent claim 1 and a communication system according to independent claim 15. The dependent claims relate to optional embodiments.

According to a first aspect, the disclosure relates to a method for establishing a plurality of secret keys shared between the sending unit and a plurality of receiving units, wherein the sending unit is connected to the plurality of receiving units by a plurality of communication channels. The method comprises transmitting, at the sending unit, a first sequence of electromagnetic signal pulses to a first receiving unit among the plurality of receiving units via a first communication channel among the plurality of communication channels for establishing a first cryptographic key shared between the sending unit and the first receiving unit, wherein each electromagnetic signal pulse of the first sequence of electromagnetic signal pulses corresponds to a bit of a first random bit sequence according to a key distribution protocol. The method further comprises transmitting, at the sending unit, a second sequence of electromagnetic signal pulses to a second receiving unit among the plurality of receiving units via a second communication channel among the plurality of communication channels for establishing a second cryptographic key shared between the sending unit and the second receiving unit, wherein each electromagnetic signal pulse of the second sequence of electromagnetic signal pulses corresponds to a bit of a second random bit sequence according to the key distribution protocol. The method further comprises determining a first key bandwidth share for the first sequence of electromagnetic signal pulses, and determining a second key bandwidth share for the second sequence of electromagnetic signal pulses, wherein the first key bandwidth share and the second key bandwidth share are determined by means of an optimization, wherein an optimization functional of the optimization depends on a user-selected distribution parameter that reflects a degree of uniformity in the amount of the first and second secret cryptographic keys shared with the first receiving unit and the second receiving unit, respectively.

According to the techniques of the present disclosure, the respective key bandwidth shares may be determined according to an optimization that depends on the user-selected distribution parameter reflecting a degree of uniformity or non-uniformity in the amount of the first and second secret cryptographic keys shared between the sending unit and the first receiving unit and the second receiving unit, respectively. By selecting the distribution parameter, the user may express and impose a preference for how the sending unit should distribute the available cryptographic key resources among the different receiving units. The first key bandwidth share and the second key bandwidth share may then be determined in accordance with the user-selected distribution parameter. The techniques of the present disclosure thereby allow to take into account differences that may exist in the physical properties of the different communication channels and/or receiving units of the multi-user scenario when allocating the respective key bandwidth shares.

In general, the physical properties of the second communication channel may differ from the physical properties of the first communication channel, and similarly the physical properties of the second receiving unit may differ from the physical properties of the first receiving unit.

For instance, such differences may be due to differences in material or length of the first and second communication channels, or may be due to different environmental conditions of the environments in which the first and second communication channel and/or the first and second receiving units are respectively operating.

Moreover, an eavesdropper (conventionally called "Eve") may try to interfere with or tap the distribution of cryptographic keys over the first and/or second communication channel, which may effectively reduce the key rate at which cryptographic keys may be generated over the first and second communication channels.

In general, these and any other differences may be expressed in terms of a quality parameter pertaining to the respective communication channel and/or pertaining to the respective receiving unit. In the context of the present disclosure, the quality parameter may express a suitability of the respective communication channel and/or receiving unit for quantum key distribution according to the key distribution protocol.

According to an embodiment, the first key bandwidth share is determined in accordance with a first quality parameter pertaining to the first communication channel and/or the first receiving unit, and/or in accordance with a second quality parameter pertaining to the second communication channel and/or the second receiving unit.

Similarly, the second key bandwidth share may be determined in accordance with a second quality parameter pertaining to the second communication channel and/or the second receiving unit, and/or in accordance with a first quality parameter pertaining to the first communication channel and/or the first receiving unit.

The first quality parameter may be or may comprise a first quantum bit error rate pertaining to the first communication channel.

According to an embodiment, the method comprises determining the first quality parameter pertaining to the first communication channel and/or the first receiving unit, in particular determining the first quantum bit error rate.

According to an embodiment, the second quality parameter may be or may comprise a second quantum bit error rate pertaining to the second communication channel.

The method may comprise determining the second quality parameter pertaining to the second communication channel and/or the second receiving unit, in particular determining the second quantum bit error rate.

According to an embodiment, the second quality parameter may differ from the first quality parameter.

In the context of the present disclosure, an electromagnetic signal pulse may correspond to any electromagnetic pulse that allows the sending unit and the respective receiving unit to establish a secret cryptographic key, possibly by means of postprocessing techniques.

According to an embodiment, an electromagnetic signal pulse may may comprise a photon pulse and/or a coherent light pulse.

According to an embodiment, at least part of the electromagnetic signal pulses shared between the sending unit and the respective receiving unit may be employed for authenticating the respective communication channel.

In an embodiment, the method further comprises authenticating the first communication channel, in particular by employing at least part of the first sequence of electromagnetic signal pulses.

Similarly, the method may further comprise authenticating the second communication channel, in particular by employing at least part of the second sequence of electromagnetic signal pulses.

By means of previously conducted processes comprising error correction and/or information reconciliation and/or privacy amplification, the users may collect pre-shared key further used for public channel authentication needs.

In the context of the present disclosure, the first key bandwidth share may correspond to a fraction of a total number of electromagnetic signal pulses sent by the sending unit, in particular in a given communication round among a plurality of communication rounds, from the sending unit to the first receiving unit. In other words, the first key bandwidth share may correspond to a relative share of electromagnetic signal pulses sent to the first receiving unit, among the plurality of receiving units.

Similarly, the second key bandwidth share may correspond to a fraction of a total number of electromagnetic signal pulses sent by the sending unit, in particular in a given communication round among a plurality of communication rounds, from the sending unit to the second receiving unit. Hence, the second key bandwidth share may correspond to a relative share of electromagnetic signal pulses sent to the second receiving unit, among the plurality of receiving units.

In an embodiment, the method further comprises determining a first key generation rate for the first sequence of electromagnetic signal pulses.

According to an embodiment, the first key generation rate may be determined in accordance with the first quality parameter, such as the first quantum bit error rate.

The method may further comprise determining the first key bandwidth share for the first sequence of electromagnetic signal pulses based on the first key generation rate.

Similarly, the method may further comprise determining a second key generation rate for the second sequence of electromagnetic signal pulses.

According to an embodiment, the second key generation rate may be determined in accordance with the second quality parameter, such as the second quantum bit error rate.

The method may further comprise determining the second key bandwidth share for the second sequence of electromagnetic signal pulses based on the second key generation rate.

According to an embodiment, the method comprises determining the first key bandwidth share for the first sequence of electromagnetic signal pulses based on the first key generation rate and based on the second key generation rate.

Similarly, the method may comprise determining the second key bandwidth share for the second sequence of electromagnetic signal pulses based on the first key generation rate and based on the second key generation rate.

In the context of the present disclosure, the first key generation rate may amount to a ratio of (i) the amount of secret cryptographic key shared between the sending unit and the first receiving unit, and (ii) the number of electromagnetic signal pulses in the first sequence of electromagnetic signal pulses sent from the sending unit to the first receiving unit.

Similarly, the second key generation rate may amount to a ratio of (i) the amount of secret cryptographic key shared between the sending unit and the second receiving unit, and (ii) the number of electromagnetic signal pulses in the second sequence of electromagnetic signal pulses sent from the sending unit to the second receiving unit.

Hence, the first key generation rate and the second key generation rate may describe the efficiency of key generation between the sending unit and the first receiving unit and second receiving unit, respectively.

According to an embodiment, determining the first key bandwidth share and determining the second key bandwidth share comprises assigning a first bandwidth weight pertaining to the first sequence of electromagnetic signal pulses and assigning a second bandwidth weight pertaining to the second sequence of electromagnetic signal pulses, respectively.

By assigning the first bandwidth weight and the second bandwidth weight, the amount of key shared between the sending unit and the respective first and second receiving units may be adjusted or optimized.

According to an embodiment, the first bandwidth weight is selected as a function of a first key generation rate for the first sequence of electromagnetic signal pulses and/or as a function of a second key generation rate for the second sequence of electromagnetic signal pulses.

Alternatively or additionally, the second bandwidth weight may be selected as a function of a first key generation rate for the first sequence of electromagnetic signal pulses and/or as a function of a second key generation rate for the second sequence of electromagnetic signal pulses.

According to an embodiment, the first bandwidth weight and/or the second bandwidth weight are determined by means of the optimization.

According to an embodiment, the first bandwidth weight is proportional to an inverse of the first key generation rate for the first sequence of electromagnetic signal pulses.

Similarly, the second bandwidth weight may be proportional to an inverse of the second key generation rate for the second sequence of electromagnetic signal pulses.

By choosing the bandwidth weights proportional to the inverse of the respective key generation rates, it may be ensured that receiving units that suffer from a low key generation rate, such as due to a particularly noisy communication channel or an enhanced activity by an eavesdropper, receive an increased share of the bandwidth, so to compensate for these detrimental effects.

According to an embodiment, the first bandwidth weight and the second bandwidth weight are assigned to be no larger than a first maximum weight and no larger than a second maximum weight, respectively.

By setting maximum values for the respective bandwidth weights, an excessive use of the quantum key distribution resources by a single receiving unit may be countered.

According to an embodiment, the second maximum weight may be equal to the first maximum weight.

Optionally, the first maximum weight may be selected as a function of a first key generation rate for the first sequence of electromagnetic signal pulses.

Similarly, the second maximum weight may be selected as a function of a second key generation rate for the second sequence of electromagnetic signal pulses.

According to an embodiment, the first maximum weight is proportional to an inverse of the first key generation rate for the first sequence of electromagnetic signal pulses.

Similarly, the second maximum weight may be proportional to an inverse of the second key generation rate for the second sequence of electromagnetic signal pulses.

According to an embodiment, the first maximum weight and/or the second maximum weight are proportional to an average of the inverse of a plurality of key generation rates pertaining to the plurality of receiving units.

According to an embodiment, the first bandwidth weight comprises or may be given in terms of an exponential function of the first key generation rate and/or the second key generation rate.

In an embodiment, the first bandwidth weight comprises or may be given in terms of an exponential function of an average of the inverse of a plurality of key generation rates pertaining to the plurality of receiving units.

Similarly, the second bandwidth weight may comprise or may be given in terms of an exponential function of the first key generation rate and/or the second key generation rate.

In an embodiment, the second bandwidth weight may comprise or may be given in terms of an exponential function of an average of the inverse of a plurality of key generation rates pertaining to the plurality of receiving units.

According to an embodiment, the first bandwidth weight comprises or may be given in terms of a Heaviside step function of the first key generation rate and/or the second key generation rate.

Similarly, the second bandwidth weight may comprise or may be given in terms of a Heaviside step function of the first key generation rate and/or the second key generation rate.

Both the exponential function and the Heaviside step function provide for desirable properties of the weight function, in particular a suitable boundary behavior for both high and low key generation rates.

According to an embodiment, the optimization functional comprises a Gini coefficient, in particular a Gini coefficient based on at least a first amount of the first cryptographic key shared between the sending unit and the first receiving unit, and a second amount of the second cryptographic key shared between the sending unit and the second receiving unit.

Gini coefficients are widely used in economic theory to describe the distribution of wealth or income, and in particular capture the amount of inequality in the distribution of a given random variable, such as wealth or income.

In the context of the present disclosure, the Gini coefficient may describe an amount of inequality or an amount of uniformity in the distribution of secret cryptographic keys shared with the first receiving unit and the second receiving unit, respectively.

According to an embodiment, the optimization functional is given in terms of at least a first key generation rate for the first sequence of electromagnetic signal pulses and a second key generation rate for the second sequence of electromagnetic signal pulses.

The techniques of the present disclosure have been illustrated above with reference to at least a first receiving unit and a second receiving unit. However, it is a particular advantage that the techniques of the present disclosure may be employed in networks comprising any number of receiving units. In these configurations, the steps described above and further below for the first receiving unit and the second receiving unit may be performed analogously for the n-th receiving unit, for any integer n > 2.

According to an embodiment, the sending unit and the plurality of receiving units may be arranged in a star topology.

However, the techniques of the present disclosure may be employed in a variety of network topologies, which may generally comprise any number of sending units and any number of receiving units.

In the context of the present disclosure, each communication channel among the plurality of communication channels may be adapted to transmit quantum information between the sending unit and the respective receiving unit.

In an embodiment, the (first and second) communication channel may be or may comprise an optical channel, such as a fiber link.

According to an embodiment, each communication channel may also be adapted to additionally transmit classical information between the sending unit and the respective receiving unit.

The classical side channel may be employed to exchange classical information between the sending unit and the plurality of receiving units, as may be required by the key distribution protocol. The classical information may be cryptographically authenticated information.

According to an embodiment, the method may further comprise sharing a cryptographic key between the first receiving unit and the second receiving unit.

Sharing a cryptographic key between the first receiving unit and the second receiving unit may be achieved by sharing one and the same cryptographic key between the sending unit and the first and second receiving units.

Hence, in an embodiment, the second shared cryptographic key may coincide with the first shared cryptographic key.

According to an embodiment, both the first receiving unit and the second receiving unit may be connected to the sending unit by means of an optical switch unit.

According to an embodiment, the optical switch unit may be cryptographically securely controlled by the sending unit.

According to an embodiment, the optical switch unit may be integrated into the sending unit.

According to an embodiment, the first communication channel and/or the second communication channel may comprise a plurality of spatially separated amplifier units.

Amplifier units may be employed to enhance the distance over which the respective cryptographic keys can be securely shared.

According to an embodiment, the method further comprises receiving, at the sending unit, a first cryptographic key request from the first receiving unit, and/or receiving, at the sending unit, a second cryptographic key request from the second receiving unit.

The first cryptographic key request may comprise information pertaining to a first size and/or a first timing of a first cryptographic key requested by the first receiving unit.

Similarly, the second cryptographic key request may comprise information pertaining to a second size and/or a second timing of a second cryptographic key requested by the second receiving unit.

The sending unit may transmit the first sequence of electromagnetic signal pulses and/or the second sequence of electromagnetic signal pulses in accordance with the first cryptographic key request and the second cryptographic key request, respectively.

The first cryptographic key request and/or the second cryptographic key request may be encoded by means of a cryptographic key common to the sending unit and the plurality of receiving units.

By encoding the first cryptographic key request and/or the second cryptographic key request, the security of the quantum key distribution scheme against attacks by an eavesdropper may be further enhanced.

The cryptographic key common to the sending unit and the plurality of receiving units may be established by means of the key distribution protocol according to the present disclosure. In particular, parts of the first cryptographic key shared between the sending unit and the first receiving unit and parts of the second cryptographic key shared between the sending unit and the second receiving unit may establish the common cryptographic key that encodes the first cryptographic key request and/or the second cryptographic key request.

According to an embodiment, the first key bandwidth share and the second key bandwidth share may be determined and/or adjusted in accordance with the first cryptographic key request from the first receiving unit and in accordance with the second cryptographic key request from the second receiving unit.

By determining and/or adjusting the first key bandwidth share and the second key bandwidth share in accordance with the amount of key requested from the first receiving unit and the second receiving unit, an excessive key sharing with one of the receiving units may be effectively avoided.

According to an embodiment, the method further comprises determining, at the sending unit, a sequence or an order of transmitting the first sequence of electromagnetic signal pulses to the first receiving unit and of transmitting the second sequence of electromagnetic signal pulses to the second receiving unit, in particular in accordance with the first cryptographic key request and/or the second cryptographic key request.

Determining the sequence or order may comprise ordering key requests received from the plurality of receiving units, in particular in terms of increasing transmission time.

According to an embodiment, the method comprises setting the first key bandwidth share to zero in case the first quality parameter is below a pre-defined first quality threshold.

By setting the first key bandwidth share to zero, the key distribution to the first receiving unit can be effectively cut, or at least suspended in case the first communication channel has too high losses. The key can then be re-distributed among the remaining receiving units.

Similarly, the method may comprise setting the second key bandwidth share to zero in case the second quality parameter is determined to be below a pre-defined second quality threshold.

While the method steps of the first aspect have been described above in a certain order, in general the steps may be implemented in any time order.

According to an embodiment, the method steps described above with reference to the first aspect may be iterated in a plurality of communication rounds according to the key distribution protocol.

In general, a key distribution protocol may comprise any integer number m of (classical and/or quantum) communication rounds.

In a second aspect, the disclosure relates to a computer program or to a computer program product or to a computer-readable storage medium comprising computer-readable instructions which, when executed by a computer, cause the computer to carry out the method with some or all of the steps described above.

In a third aspect, the disclosure relates to a communication system comprising means adapted to implement the method with some or all of the steps described above with reference to the first aspect.

According to an embodiment, the communication system may comprise a sending unit, wherein the sending unit may be adapted to be connected to a plurality of receiving units by a plurality of communication channels.

According to an embodiment, the sending unit may be adapted to transmit a first sequence of electromagnetic signal pulses to a first receiving unit among the plurality of receiving units via a first communication channel among the plurality of communication channels for establishing a first cryptographic key shared between the sending unit and the first receiving unit, wherein each electromagnetic signal pulse of the first sequence of electromagnetic signal pulses corresponds to a bit of a first random bit sequence according to a key distribution protocol.

The sending unit may be further adapted to transmit a second sequence of electromagnetic signal pulses to a second receiving unit among the plurality of receiving units via a second communication channel among the plurality of communication channels for establishing a second cryptographic key shared between the sending unit and the second receiving unit, wherein each electromagnetic signal pulse of the second sequence of electromagnetic signal pulses corresponds to a bit of a second random bit sequence according to the key distribution protocol.

The communication system, and in particular the sending unit, may be adapted to determine a first key bandwidth share for the first sequence of electromagnetic signal pulses, and to determine a second key bandwidth share for the second sequence of electromagnetic signal pulses.

The first key bandwidth share and the second key bandwidth share may be determined by means of an optimization, wherein an optimization functional of the optimization depends on a user-selected distribution parameter that reflects a degree of uniformity or non-uniformity in the amount of the first and second cryptographic keys shared with the first receiving unit and the second receiving unit, respectively.

The sending unit may be further adapted to implement a method with some or all of the steps described above with reference to the first aspect.

### Brief Description of the Figures

The techniques of the present disclosure and the advantages associated therewith are best understood from a detailed description of embodiments in conjunction with the accompanying drawings, in which:
- Fig. 1: is a schematic illustration of a communication system according to an embodiment;
- Fig. 2: is a schematic illustration of another communication system with an optical switch according to an embodiment;
- Fig. 3: is a schematic illustration of a key distribution protocol in accordance with an embodiment;
- Fig. 4: is a schematic diagram illustrating the key request procedure in a key distribution protocol in accordance with an embodiment;
- Fig. 5: schematically illustrates different bandwidth weights as a function of the key generation rate, according to an embodiment;
- Fig. 6: depicts a table that lists the amount of cryptographic key shared between a sending unit and 10 receiving units, for different cut-off parameters for the bandwidth weights, according to an embodiment;
- Fig. 7: depicts a table that lists the amount of cryptographic key shared between a sending unit and 50 receiving units, for different cut-off parameters for the bandwidth weights, according to an embodiment;
- Fig. 8a, 8b: schematically illustrate a choice of a cut-off parameter for the bandwidth weights by means of an optimization of a utility function, according to an embodiment;
- Fig. 9: illustrates a key distribution setup comprising a sending unit at a central location and a plurality of receiving units that are spatially uniformly distributed in a round city of radius R, according to an embodiment;
- Fig. 10 a-d: illustrate the distribution of key generation rates and the cutoff selection in a round city of a comparatively large radius for an exponential weight function, according to an embodiment;
- Fig. 11 a-d: illustrate the distribution of key generation rates and the cutoff selection in a round city of a comparatively small radius for an exponential weight function, according to an embodiment;
- Fig. 12: shows a plot of a weight function derivative in terms of a population parameter, according to an embodiment;
- Fig. 13 a-d: illustrate the distribution of key generation rates and the cutoff selection in a round city of a comparatively large radius, according to an embodiment;
- Fig. 14a, 14b: compare an exponential weight function with a Heaviside-type weight function, according to an embodiment;
- Fig. 15 a-d: illustrate the distribution of key generation rates and the cutoff selection in a round city of a comparatively large radius for an exponential weight function and a Heaviside-type weight function in comparison, according to an embodiment; and
- Fig. 16: is a flow diagram illustrating a method for establishing a plurality of secret cryptographic keys according to an embodiment.

### Detailed Description

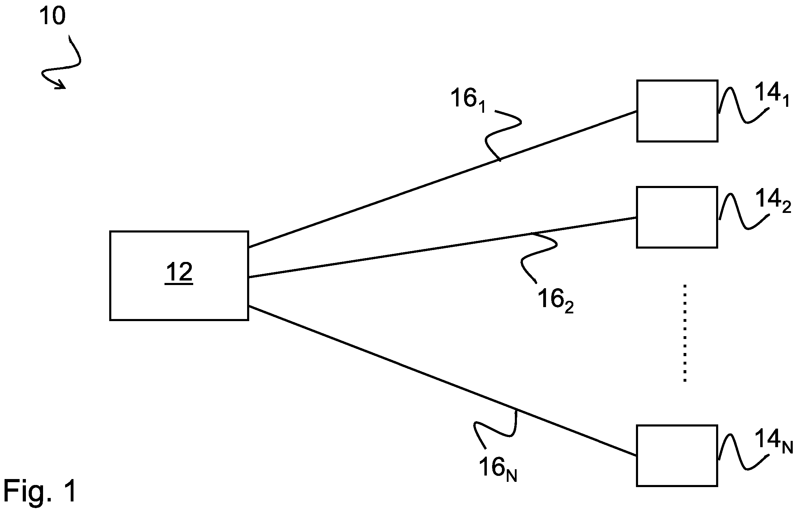

Fig. 1 is a schematic illustration of a communication system 10 that may be employed in the context of the present disclosure. The communication system 10 comprises a sending unit 12 (conventionally denoted or associated with "Alice") and a plurality of *N* receiving units 14₁, 14₂, ..., 14_{N} (conventionally denoted or associated with "Bob"), that are coupled to the sending unit 12 by a respective plurality of communication channels 16₁, 16₂, ..., 16_{N}, wherein *N* may be any positive integer number.

The communication channels 16₁, 16₂, ..., 16_{N} may be adapted to transmit quantum information and/or classical information between the sending unit 12 and the plurality of receiving units 14₁, 14₂, ..., 14_{N}. In particular, the communication channels may be or may comprise optical fiber links 16₁, 16₂, ..., 16_{N}.

Optionally, some or all of the communication channels 16₁, 16₂, ..., 16_{N} may comprise optical amplifiers (not shown in Fig. 1) to enhance the communication distance, such as Erbium Doped Fiber Amplifiers (EDFA).

In addition to the optical fiber links 16₁, 16₂, ..., 16_{N}, the sending unit 12 and the plurality of receiving units 14₁, 14₂, ..., 14_{N} may be linked by a classical information channel, such as a telephone line or an authenticated public classical channel (not shown in Fig. 1).

Alice 12 and the plurality of Bobs 14₁, 14₂, ..., 14_{N} may employ the communication system 10 and employ quantum techniques to share between them cryptographic keys about which an eavesdropper (conventionally denoted or associated with "Eve") tapping on the communication channels 16₁, 16₂, ..., 16_{N} can obtain no or only a negligible amount of information. These cryptographic keys could then be used by Alice 12 and the plurality of Bobs 14₁, 14₂, ..., 14_{N} as a cryptographic one-time pad for interchanging sensitive information, or as a resource for other cryptographic tasks.

In an exemplary key distribution protocol, Alice 12 may encode a random bit string into a sequence of coherent light pulses and send them to one of the Bobs 14₁, 14₂, ..., 14_{N} via the respective communication channel 16₁, 16₂, ..., 16_{N}, such as in conformity with a BB84 key distribution protocol or a B92 key distribution protocol or any other known quantum key distribution protocol. The resulting signals may then be received and measured by Bob 14₁, 14₂, ..., 14_{N}, and the results may be exchanged via an authenticated classical communication channel. An eavesdropper Eve could potentially seize part of the optical signal, for instance by bending the transmitting optical fiber and detecting the transcending optical modes. However, Alice 12 and the respective Bob 14₁, 14₂, ..., 14_{N} may use the authenticated public classical channel to perform information reconciliation (increasing their informational advantage over Eve) and privacy amplification to eradicate Eve's information without sacrificing too many key bits.

Employing the techniques described above, Alice 12 may subsequently establish secure cryptographic keys with any or all of the respective Bobs 14₁, 14₂, ..., 14_{N} individually, such as by time-sharing and multiplexing the quantum key distribution resources. The key generation may proceed in a plurality of *n_{R}* communication rounds as prescribed by a key distribution protocol, wherein *n_{R}* may denote any positive integer. In each of the *n_{R}* rounds, each of the Bobs 14₁, 14₂, ..., 14_{N} may request a certain amount of secret key from Alice 12. In accordance with the key requests obtained from the respective Bobs 14₁, 14₂, ..., 14_{N}, Alice 12 may set the respective key bandwidth shares, which may denote the fraction of the total number of electromagnetic signal pulses sent by Alice 12 in a particular communication round from Alice 12 to the respective Bob 14₁, 14₂, ..., 14_{N}.

In general, the key generation and key sharing capabilities of the sending unit 12 may be limited, such as due to technological and bandwidth constraints. Under these circumstances, the various receiving units 14₁, 14₂, ..., 14_{N} may compete for cryptographic key. The different communication channels 16₁, 16₂, ..., 16_{N} may differ in their material, length and/or signal distribution properties, while the different receiving units 14₁, 14₂, ..., 14_{N} may differ in their data reception and/or data processing characteristics. Hence, the connection speeds to the various receiving units 14₁, 14₂, ..., 14_{N} may differ significantly, and these differences may be expressed in terms of a quality parameter that characterizes the suitability of the respective communication channel 16₁, 16₂, ..., 16_{N} and/or receiving unit 14₁, 14₂, ..., 14_{N} for quantum key distribution.

Under these circumstances, the user controlling the sending unit 12 may need to decide how to best, or most fairly, allocate the signal distribution to the different receiving units 14₁, 14₂, ..., 14_{N}.

In order to establish secret cryptographic keys in such a multi-user scenario, the sending unit 12 may be adapted to transmit a first sequence of electromagnetic signal pulses to the first receiving unit 14₁ via the first communication channel 16₁ for establishing a first cryptographic key shared between the sending unit 12 and the first receiving unit 14₁, wherein each electromagnetic signal pulse of the first sequence of electromagnetic signal pulses corresponds to a bit of a first random bit sequence according to a key distribution protocol.

The sending unit 12 may be further adapted to transmit a second sequence of electromagnetic signal pulses to the second receiving unit 14₂ via the second communication channel 16₂ for establishing a second cryptographic key shared between the sending unit 12 and the second receiving unit 14₂, wherein each electromagnetic signal pulse of the second sequence of electromagnetic signal pulses corresponds to a bit of a second random bit sequence according to the key distribution protocol.

The sending unit 12 may be further adapted to determine a first key bandwidth share for the first sequence of electromagnetic signal pulses, and to determine a second key bandwidth share for the second sequence of electromagnetic signal pulses, wherein the first key bandwidth share and the second key bandwidth share are determined by means of an optimization, wherein an optimization functional of the optimization depends on a user-selected distribution parameter that reflects a degree of uniformity in the amount of the first and second cryptographic keys shared with the first receiving unit 14₁ and the second receiving unit 14₂, respectively.

By selecting a value of the distribution parameter, and determining the respective key bandwidth shares by means of the optimization in terms of the distribution parameter, the user controlling the sending unit 12 may effectively determine how much cryptographic key to share with each of the first receiving unit 14₁ and the second receiving unit 14₂.

In the same manner, Alice 12 may determine the respective key bandwidth shares when establishing secret cryptographic keys with more than two Bobs Bob ₁ 14 ₁, Bob ₂ 14 ₂, ... and Bob *_{N}* 12 *_{N}.*

Different examples for the optimization and optimization functional will subsequently be described in additional detail further below.

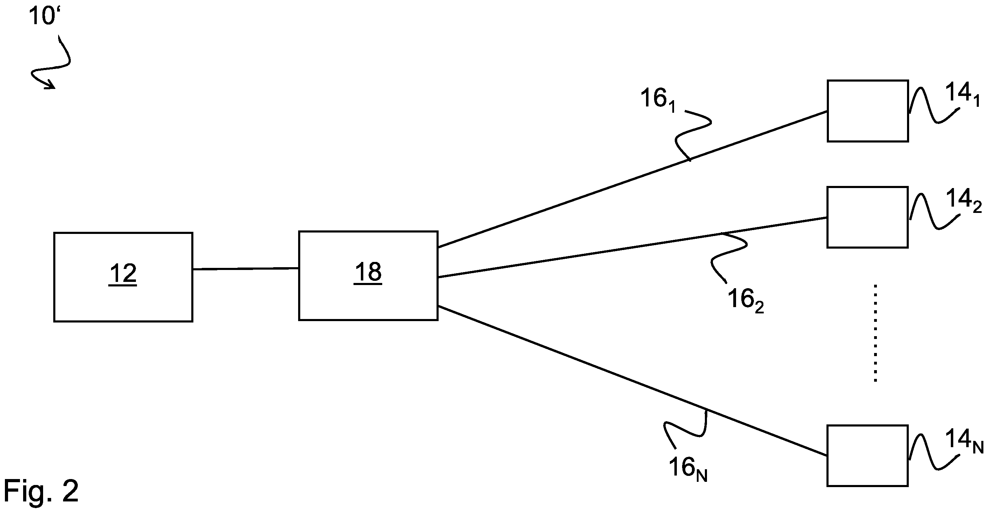

Fig. 2 shows a communication system 10' that generally corresponds in design and functionality to the communication system 10 described above with reference to Fig. 1, and corresponding elements share the same reference signs. In the configuration of Fig. 2, the sending unit 12 and the plurality of receiving units 14₁, 14₂, ..., 14_{N} are arranged in a star topology, and an optical switch unit 18 is employed to selectively switch the signal transmission from the sending unit 12 to each of the respective receiving units 14₁, 14₂, ..., 14_{N}.

We assume that Alice 12 controls the optical switch unit 18 between Bob ₁ 14 ₁, Bob ₂ 14 ₂, ... and Bob *_{N}* 12 *_{N}*, and that Alice 12 is the only user capable of sending signals via the quantum communication channels 16₁, 16₂, ..., 16_{N}. In turn, the respective Bobs 14₁, 14₂, ..., 14_{N} can only exchange secret key with the other users by requiring Alice to perform a corresponding key distribution.

We assume that all service commands, such as an intensity cross-check of the test pulses and any post-processing information exchange, are transmitted via an authenticated classical channel (not shown in Fig. 2). The authentication, in turn, imposes an extra key cost - i.e., some minimum amount of key should be distributed as electromagnetic signal pulses to all of the respective Bobs 14₁, 14₂, ..., 14_{N}, even in the absence of an active key distribution.

Alice's sending unit 12 may function as a mediator of the whole operation. Therefore, her basic task is not only limited to data transmission (i.e., QKD procedures) but also includes the collection of all the users' 14₁, 14₂, ..., 14_{N} data demands and establishing an appropriate regime for the operation of the optical switch 18. The latter may comprise defining the fraction of generated pulses *Lᵢ* corresponding to each user 14₁, 14₂, ..., 14_{N}. The key allocation may take place in accordance with a Key Allocation Table (KAT), reflecting the priority of the users' 14₁, 14₂, ..., 14_{N} key requests.

In general, the number of users 14₁, 14₂, ..., 14_{N} demanding communication with Alice's sending unit 12 as well as the quality of the quantum communication channels 16₁, 16₂, ..., 16_{N} between them may change over time. Therefore it may be advisable to dynamically update *Lᵢ* over time. Let us assume the splitting distribution of quantum key optical pulses between several clients is decided upon by the Key Allocation Table (KAT). To reduce the communication load to the optical switch scheduler/controller, we recalculate the KAT only once in a specified amount of time *T_{KAT}.* All clients' 14₁, 14₂, ..., 14_{N} data requests received by Alice 12 will take effect only after the KAT recalculation and subsequent upload of the calculated bandwidth shares to the optical switch scheduler/controller.

After the aforementioned procedures on processing users' 14₁, 14₂, ..., 14_{N} demands, Alice 12 may establish an appropriate regime for the switch operation. In particular, she may specify when and for which period the pulses will be addressed to the respective receiving unit 14₁, 14₂, ..., 14_{N}.

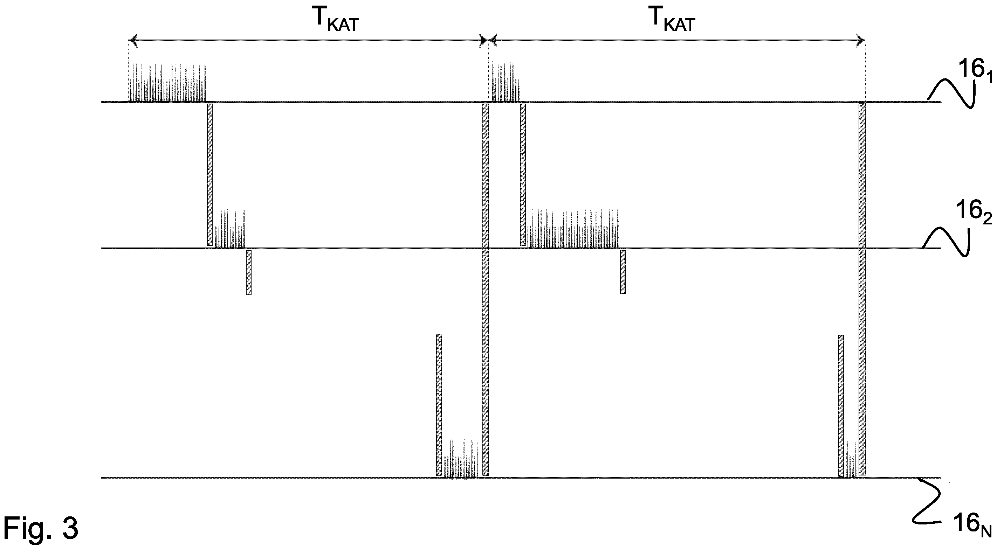

Fig. 3 schematically illustrates the commands sent to the switch 18 and the functioning of the switch 18. Each track in Fig. 3 signifies a quantum communication channel 16ᵢ attributed to one of the users Bob Bᵢ 14ᵢ, and the pulses on each track qualitatively depict the electromagnetic signal pulses sent to the corresponding Bob Bᵢ 14ᵢ. When the sequence of the latter breaks, the switch 18 is programmed to redirect further pulses coming from Alice's apparatus to the other users 14ⱼ, j ≠ i. In particular, Fig. 3 illustrates at which moments and to which users the optical switch unit 18 retranslates signals from Alice's source. This operation is designated by a rectangle from one user's line to the other user's line. As explained above, part of the respective electromagnetic signal pulses may be employed for further authentication and encryption procedures to operate via a classical channel.

Let us consider Alice 12 having an active QKD session with one or several users 14₁, 14₂, ..., 14_{N}. We suppose that a fraction of users 14₁, 14₂, ..., 14ₚ for some integer p < N seek a QKD session from the beginning of the upcoming *T*_{KAT} session. The other users 14ₚ₊₁, ..., 14_{N} are not present in the Key Allocation Table, i.e., these are idle users in the current communication round. The switch may be programmed to redirect the following number of pulses to different users:
- *N*₁ = *L*₁*T*_{KAT} to *B*₁;
- Then *N*₂ = *L*₂*T*_{KAT} to *B*₂, etc.
- *Nₚ* = *LₚT*_{KAT} to *Bₚ*;
- Besides, *N*_{*p*+1} = ··· *= N_{N}* = 0 to *B*_{*p*+1}, ... ,*B_{N}*.

Several iterations of this process (regeneration of the KAT) are depicted in Fig.3. New pulse repetition frequencies may be distributed between all the users 14₁, 14₂, ..., 14_{N} newly after expiration of each *T*_{KAT} period. These steps may be repeated until the *T*_{KAT} period has expired.

We also note that *N*₁, *N*₂, *..., N_{N}* may generally be functions of the spatial distances of the corresponding users 14₁, 14₂, ..., 14_{N} from the central node, i.e., from the sending unit 12. Therefore, after each expiration of the *T*_{KAT} period (also accompanied by another update of the last parameters), Alice 12 may change *N*₁, *... N_{N}* correspondingly by sending this information to (a trustworthy person controlling) the switch 18.

### (a) Key request procedure

In realistic communication scenarios, the classical channel allows some interventions by (malicious) third parties. This means that not all the public messages posted by one user can be expected to be received by the other. Thus, to not miss any QKD session requests, we may force all the users to expect the reception of particular messages at a given time. Additionally, the optical switch unit 18, as a part of the QKD communication system 10', may require a pre-shared key usage for changing its regime. This may be due to the fact that Alice 12 controls the switch 18 by sending commands via an authenticated classical channel. Some pre-shared key may thus need to be spent on authentication purposes. We, therefore, assume the switch functioning to be modified discretely, only once in a pre-defined period. For these two reasons, any QKD session may be required only at the specific moments when everybody expects a message to be received.

Thus, we may divide the timeline into short intervals of *T*_{KAT} in length. At a pre-defined point within these intervals, the users may be given the opportunity to express their desire to start a new session. After a certain pre-defined period, the sender Alice 12 should respond to this (these) request(s). Shortly after that, all the users Bobᵢ 14ᵢ should confirm the reception of this message. Only if all the users Bobᵢ 14ᵢ confirm this reception, the session with all the users in the current key allocation table may be started. Otherwise, the sender Alice 12 continues to control all the lines, tries to get into contact with the user(s) whose response(s) is(are) missing, excludes their positions from the key allocation table for the current communication round, and starts a session with the rest of them with key repetition rates announced previously. After a current session is terminated, the key allocation table may be modified.

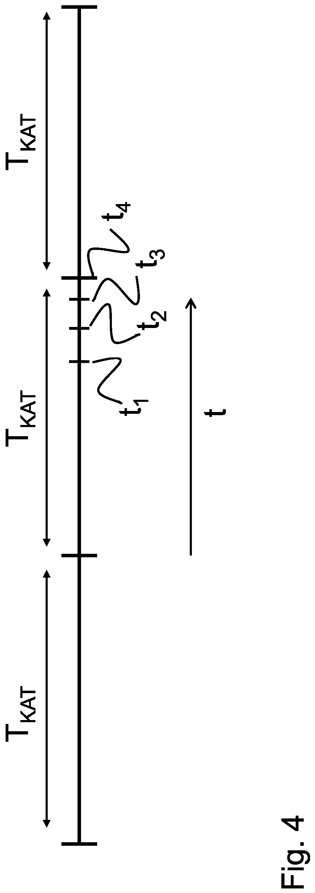

A key request procedure spanning a plurality of sessions according to an embodiment is schematically illustrated in Fig. 4.

Time t is running from left to right in Fig. 4, and is divided up into several communication rounds of *T*_{KAT} in length. Fig. 4 shows three communication rounds, but in general a key distribution protocol may comprise any number *n_{R}* of communication rounds.

In each round, at a time t₁ the users Bobᵢ 14ᵢ may announce their key distribution requests to Alice 12. At a later time t₂, Alice 12 may respond to these requests by announcing parameters for the subsequent key distribution, as described above with reference to Fig. 3. A quality parameter like the Quantum Bit Error Rate (QBER) that Alice 12 may have determined in the communication channels 16ᵢ with the various receiving units Bobᵢ 14ᵢ in the previous communication round may now be employed to determine the respective key bandwidth shares to the various receiving units Bobᵢ 14ᵢ in the present round and to announce them to the users.

At a later time t₃, the users Bobᵢ 14ᵢ may announce the reception of the overall session regime. At a still later time t₄, Alice 12 ends the session and begins a new one with the users Bobᵢ 14ᵢ that are responding. The specific timing of the times t₁, ..., t₄ within the intervals *T*_{KAT} may be selected by the sender Alice 12 and/or the users Bobᵢ 14ᵢ, may be pre-determined and previously agreed between the communication partners, and may vary from protocol to protocol.

The key allocation according to an embodiment, such as the embodiment of Figures 3 and 4, will now be described in additional detail.

### (b) Principles of Key Allocation

The overall data transmission bandwidth that Alice 12 can produce is oftentimes a limited resource. As explained above, it may thus be desirable to thoughtfully split Alice's 12 QKD pulses between all users Bobᵢ 14ᵢ requesting the data. This basic task may be designated to the optical switch 18 under the control of Alice 12. We denote the share of receiving unit 14ᵢ as *Lᵢ*.

As a first step, the respective Bobᵢ 14ᵢ announce their requests for some amount of secret key *Dᵢ*. Alice 12 puts them together into a list and calculates the expected key generation rates $\frac{{L}_{f}}{L} \left(L, QBER\right)$ for all clients 14₁, 14₂, ..., 14_{N} depending on the previously conveyed error estimation with the respective Bob. We further denote the pair of parameters (*lᵢ*, *QBERᵢ*) *-* the distance between a central node and the user Bobᵢ 14ᵢ and his quantum bit error rate - as *r_{E,i}.*

In the next step, Alice may calculate the projected bandwidth shares needed to distribute a certain amount of secret keys between all users present in the KAT. In the most general case, the user's Bobᵢ 14ᵢ "fair" bandwidth share may be calculated as follows, ${L}_{i}^{∗ , fair} = {L}_{a} \frac{{W}_{i}}{{\sum }_{j} {W}_{j}} , {W}_{i} ≡ {W}_{i} \left(\frac{{L}_{f}}{L}\left({r}_{E , i}\right)\right) ,$ where *Lₐ* is the total pulse rate available for key distribution, and *Wᵢ* plays the role of a weight function. This gives us an expression for the final frequencies of pulses that will go to the corresponding recipients: ${L}_{i} = {L}_{i}^{∗ , fair}$.

### (c) QKD Channel Clogging

In some communication scenarios, a challenge of the outlined scheme may be the "clogging" of the key distribution by one or several users. If Alice's 12 connection to some users Bobᵢ 14ᵢ is substantially worse than to others, the overall key distribution rate would significantly suffer, which would affect even the users with good connections. This challenge may be addressed with non-linear weight coefficients *Wᵢ*.

It may be advantageous to pose some conditions that the bandwidth weights *Wᵢ*, should reasonably satisfy: The first condition on the bandwidth weights *Wᵢ* is that they should ensure an equal secret key generation rate for all users Bobᵢ 14ᵢ with sufficiently good connection: ${W}_{i} \to {\left[\frac{{L}_{f}}{L}\left({r}_{E , i}\right)\right]}^{- 1} for {\left[\frac{{L}_{f}}{L}\left({r}_{E , i}\right)\right]}^{- 1} ≪ {W}_{cutoff} ,$ where *W*_{cutoff} is a characteristic bound, depicting sufficiently high line losses and thus describing a relatively high level of ${\left[\frac{{L}_{f}}{L}\left({r}_{E , i}\right)\right]}^{- 1}$.

On the other hand, we may set an upper limit Wₗᵢₘᵢₜ to the ratio of optical pulses directed to a particular user regardless of his connection speed: $∀ \frac{{L}_{f}}{L} \left({r}_{E , i}\right) ∈ {ℝ}_{\geq 0} ⇒ {W}_{i} \leq {W}_{limit} .$

Finally, we may assume the borderline expected key generation rate to be equal to, for instance ${W}_{cutoff} = \sqrt{N} ⋅ \left〈{\left[\frac{{L}_{f}}{L}\left({r}_{E , i}\right)\right]}^{- 1}\right〉 = \frac{1}{\sqrt{N}} {\sum }_{j} {\left[\frac{{L}_{f}}{L}\left({r}_{E , j}\right)\right]}^{- 1} ,$ where <A> denotes the mean value of A, and *N* is the number of active connections Alice 12 has at the moment.

One of the simplest functions which satisfies all these requirements has the following form, ${W}_{i} = {\left[\frac{{L}_{f}}{L}\left({r}_{E , i}\right)\right]}^{- 1} \left[1-exp\left(-\frac{{W}_{cutoff} \times \left〈{\left[\frac{{L}_{f}}{L}\left({r}_{E , i}\right)\right]}^{- 1}\right〉}{{\left[\frac{{L}_{f}}{L}\left({r}_{E , i}\right)\right]}^{- 1}}\right)\right] ,$ where *W*_{cutoff} is the borderline expected key generation rate.

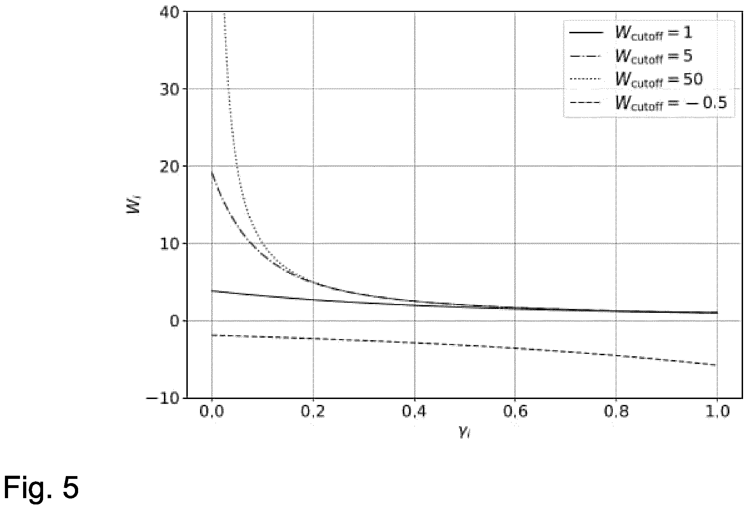

The function ${W}_{i} \left(\frac{{L}_{f}}{L}\left({r}_{{E}_{i}}\right)\right)$ is depicted in Fig. 5 for different *W*_{cutoff} values. Note that even if *Wᵢ* is negative, ${L}_{i}^{∗ , fair}$ remains positive.

### (d) Cut-off Selection

We will now describe one exemplary way of choosing the value of the *W*_{cutoff} parameter according to the preferences chosen by the communication provider.

We will first consider 5 cases. The first case is characterized by using linear weights. Alternatively, it can be described as using an infinitely large cutoff rate. In the four remaining cases, we put the cutoff rate to four different values. $\begin{matrix}{W}_{cutoff}^{\left(0\right)} = ∞ \\ {W}_{cutoff}^{\left(1\right)} = \left〈{\left[\frac{{L}_{f}}{L}\left({r}_{E , i}\right)\right]}^{- 1}\right〉 \\ {W}_{cutoff}^{\left(2\right)} = 2 ⋅ \left〈{\left[\frac{{L}_{f}}{L}\left({r}_{E , i}\right)\right]}^{- 1}\right〉 \\ {W}_{cutoff}^{\left(3\right)} = \sqrt{N} ⋅ \left〈{\left[\frac{{L}_{f}}{L}\left({r}_{E , i}\right)\right]}^{- 1}\right〉 \\ {W}_{cutoff}^{\left(4\right)} = \frac{N}{2} ⋅ \left〈{\left[\frac{{L}_{f}}{L}\left({r}_{E , i}\right)\right]}^{- 1}\right〉\end{matrix}$

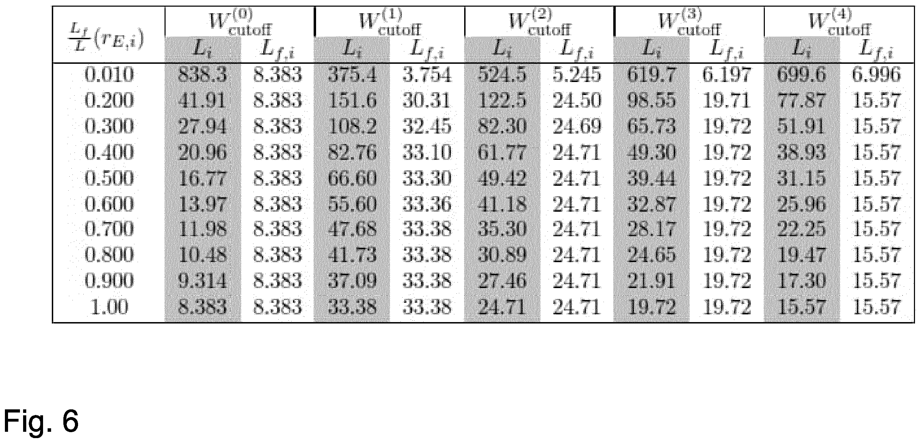

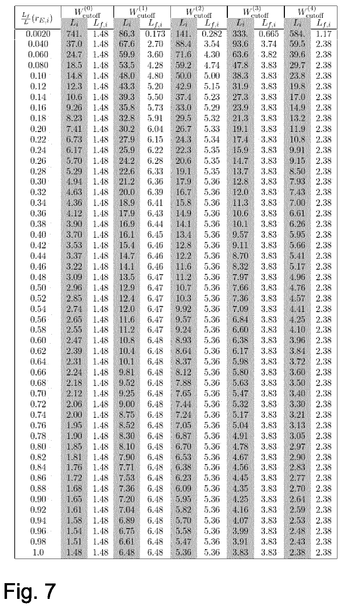

We consider two different scenarios defined by the number of Bobs connected to Alice. Fig. 6 shows a table with 10 Bobs, wheras Fig. 7 corresponds to a scenario with a much larger number of 50 Bobs. Here we assume T_{KAT} = 1 s and Lₐ = 1000 Hz. In each scenario, we have one Bob whose connection is twenty times worse than the second-worst Bob. Other Bobs' expected key generation rates are spread out evenly in the range from one to zero. The tables in Figures 6 and 7 show the pulse frequencies *Lᵢ* and key rates *L*_{*f*,*i*} that each user gets from Alice.

### (e) Optimization of the Cutoff Parameter

There is a clear trade-off between the key rate egalitarianism in the star-like network depicted in Fig. 2 and the total key distribution rate. To quantify this trade-off, we may introduce the utility function, $U = {\left(1-G\right)}^{α} {\left(\frac{{\sum }_{i = 1}^{N} {L}_{f , i}}{{L}_{α}}\right)}^{1 - α} ,$ where $G = \frac{{\sum }_{i = i}^{N} {\sum }_{j = 1}^{N} \left|{L}_{f , i}-{L}_{f , j}\right|}{2 {\sum }_{i = i}^{N} {\sum }_{j = 1}^{N} {L}_{f , j}} ∈ \left[0, 1\right] ,$ is a Gini coefficient representing the degree of inequality in terms of the final key generation rate between users, and *α* ∈ [0, 1] is a continuous parameter that may be selected by the user, such as by Alice operating the sending unit 12 or switch 18 and that represents a preference for equality (*α =* 1) or for a larger total key rate (*α =* 0). The function 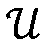 is normalized. The utility function allows one to choose *W*_{cutoff} in accordance with the preference: one may maximize 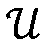 for a user-selected distribution parameter, i.e., a fixed chosen value of *α.*

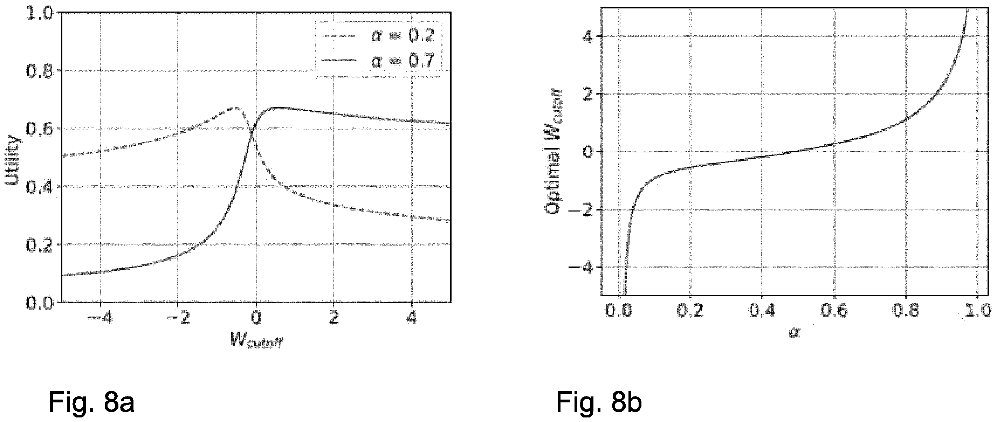

A graphic representation of the utility function 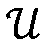 in the case of uniformly distributed *L_{f}* /*L* as a function of *W*_{cutoff} for two different values of the distribution parameter *α* is shown in Fig. 8a. Fig. 8b shows the correspondence of the optimal *W*_{cutoff} to *α* for the same distribution of *L_{f}*/*L.* The plots are built for a set of 50 users with $\frac{{L}_{f}}{L} \left({r}_{E , i}\right)$ evenly spaced on the interval (0,1]. For the sake of normalization, we set *Lₐ* equal to the number of Bobs, *Lₐ = N* × 1 s⁻¹.

One can infer that *α* = 1 embodies total disregard for the total key rate with care only about the final key rate equality of *N* users: in this case, 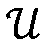 is maximized at *W*_{cutoff} = ∞. In the opposite limit *α* = 0, one only cares about the total efficiency, the maximum of which is achieved at *W*_{cutoff} = -∞.

As emphasized above, the techniques of the present disclosure can be applied to various QKD protocols. For protocols like BB84 or B92, the ratio *L_{f}* /*L* generally varies based on the distance between Alice and Bob. Thus, in a star-like network as depicted in Fig. 2, this ratio might differ among users but would typically remain (relatively) stable over time. This may contrast with the variability seen in loss control-based QKD, such as described in European patent application EP 4 047 860 A1. Whenever a new connection is established between Alice and another Bob, the rates of signal pulses sent to each user should be readjusted. This readjustment can be executed using 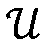 and *W*_{cutoff}.

Typically, the utility function Eq. (7) strongly depends on a fluctuating parameter varying over time and being continuously measured in the course of secret key distribution. Thus, the way we propose to build priorities between users can be adapted to other networks comprising a similar parameter. For example, the well-studied protocols BB84 and B92 are based on constant evaluation of the Quantum Bit Error Rate (QBER), which may play such a role in this case.

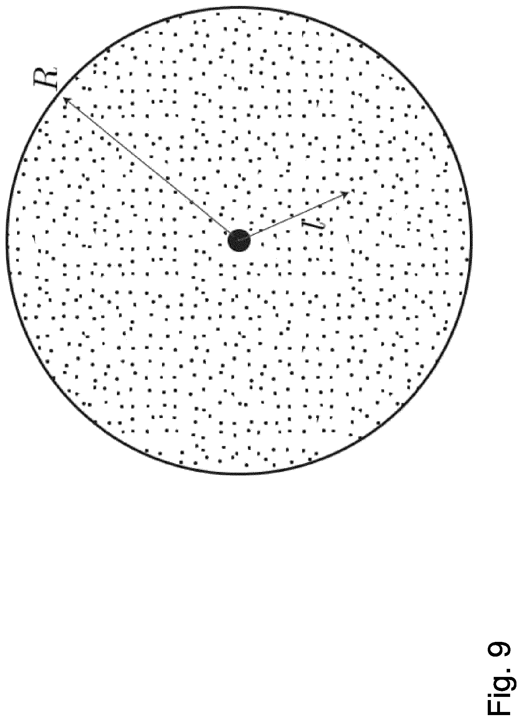

Conversely, this approach can serve as a good solution for star-like networks such as illustrated in Fig. 2. At the moment when a new user enters the system, all the pulse repetition rates corresponding to the users 14₁, 14₂, ..., 14_{N} may be recalculated. To see an application of this technique, consider a star-like system providing communication in a round city, as schematically illustrated in Fig. 9. We assume that the users' positions are randomly chosen within circular limits. We further assume the function $\frac{{L}_{f}}{L}$ to be a function of quantum channel length and to be defined according to the Pirandola-Laurenza-Ottaviani-Banchi (PLOB) bound.

We first consider a case of a network system providing connection through long distances: the city radius is R = 40 km. We assume that *L_{f}*/*L* falls exponentially with distance, $\frac{{L}_{f}}{L} \left(l\right) =$ *e^{-cl},* where *l* is the distance between the sending unit 12 and the respective receiving unit 14ᵢ, where the sending unit 12 is assumed to be positioned in the center, and c is a loss coefficient that equals 0.046 km⁻¹ corresponding to the typical fiber losses $0.2 \frac{dB}{km}$.

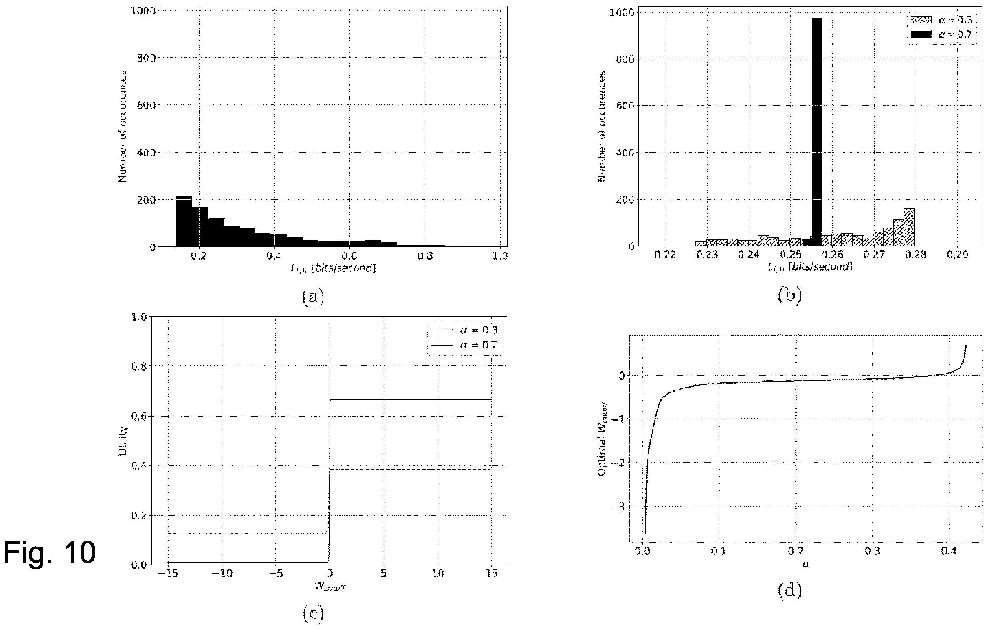

Figures 10a to 10d illustrate how the data distribution between active users changes for different values of the cutoff parameter and the distribution parameter *α* in this configuration.

In Fig. 10a, we simulate the initial distribution of users placed inside a circle of radius R and depict their key generation rates on a histogram assuming that Alice 12 sends out raw data pulses evenly, ${L}_{f , i} = {L}_{a} \frac{{L}_{f}}{L} \left(l\right) / N$. This scenario corresponds to *W*_{cutoff} = 0. Fig. 10b shows how this distribution changes after a readjustment of the key generation frequencies corresponding to each user was made. We can clearly see that a distribution parameter *α* = 0.7 corresponds to the case when there is only a small diversity in terms of data distribution between users. On the contrary, the value *α* = 0.3 lets the users with good connections benefit from it and neglects (to a certain extent) the ones with poor connections. In Fig. 10c, we show how the utility function depends on the *W*_{cutoff} parameter for this particular set of users and distribution parameters *α* = 0.7 and *a =* 0.3. Fig. 10d illustrates the optimal cutoff paramter that results from the maximization of the utility function according to Eq. (7), as a function of the distribution parameter *α.*

The plots Fig. 10a to 10d are built for a set of *N =* 1000 users with $\frac{{L}_{f}}{L} \left({r}_{E , i}\right) ∈ \left(0, 1\right]$ randomly placed in a circle of radius R = 40 km. The key generation rates are found according to the relation, dictating the PLOB bound as a function of the distance from a center. For the sake of normalization, we set *Lₐ* equal to the number of Bobs, *Lₐ = N* × 1 s⁻¹.

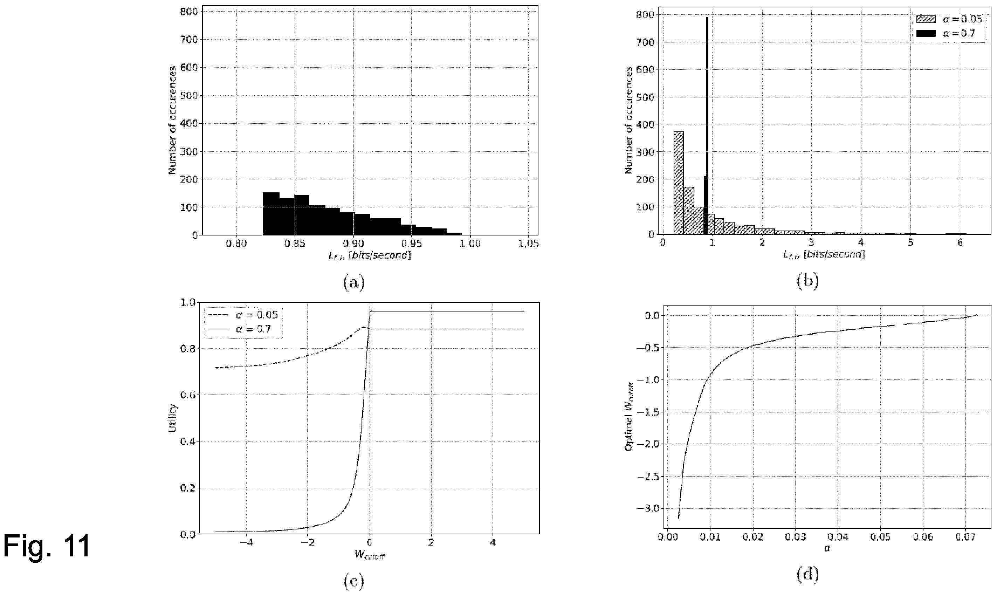

For the sake of comparison, let us consider a system localized in a small area with radius R = 4 km. Fig. 11a to 11d are analogous to Fig. 10a to 10d and show the corresponding results for this smaller radius. We can once again see that the greater value of the distribution parameter *α* = 0.7 corresponds to the case when the equality in data distribution across users is preferred over a greater overall key generation rate. We also find that in this case, even for very low values of the distribution parameter *α*, the inequality in data distribution in this system is comparatively low, and the vast majority of users collect data at almost the same speed. The equality remains beneficial for a predominant range of the distribution parameter *α* because even without the cutoff procedure, the inequality of users is already relatively small.

### (f) Choosing between Different Families of Weight Functions

In the context of the present disclosure, distributing the scarce resource of Alice's quantum signal pulses between multiple users each connected in a star-like grid may involve an optimization problem with a utility function of the form $U \left({L}_{f}\right) = {\left(1-G\left({L}_{f}\right)\right)}^{α} {\left(\frac{{\left|{L}_{f}\right|}_{1}}{{L}_{a}}\right)}^{1 - α}$

The final key generation rates ***L_{f}*** may be determined by the expected key generation rates and the shape of the weight function ***W.***

As explained above with reference to Figures 8 to 11, the use of the exponential weight function of Eq. (5) allows us to reduce the optimization space into a single parameter *W_{cutoff}.* Our goal is to select the utility function of Eq. (9) in a way that its optimization problem would yield finite solutions for intermediate values of coefficient 0 < *α* < 1.

Let us use a simplified shorthand notation for expected key generation rates. ${γ}_{i} ≡ \frac{{L}_{f}}{L} \left({r}_{E , i}\right)$

Eq. (5) will hence take the form ${W}_{i} = {γ}_{i}^{- 1} \left[1-exp\left(-\frac{{W}_{cutoff} \times \left〈{γ}_{i}^{- 1}\right〉}{{γ}_{i}^{- 1}}\right)\right] .$

Apart from the shape of weight function Eq. (11), the optimization solution depends on a particular set of expected key generation rates ***γ*.** However, since expected key generation rates are random in its nature we may adopt a statistical approach. Henceforth we explore the density function of weights *Wᵢ*. $\frac{\partial {W}_{i}}{\partial n} = \frac{\partial {W}_{i}}{\partial {γ}_{i}} ⋅ \frac{\partial {γ}_{i}}{\partial n} = - \frac{1 - {e}^{- {ω}_{c} {γ}_{i}} - {ω}_{c} {γ}_{i} {e}^{- {ω}_{c} {γ}_{i}}}{{γ}_{i}^{2}} ⋅ \frac{\partial {γ}_{i}}{\partial n} ,$ where we assumed $\frac{\partial \left〈{γ}_{i}^{- 1}\right〉}{\partial {γ}_{i}} \approx 0$ and ${ω}_{c} = {W}_{cutoff} \times \left〈{γ}_{i}^{- 1}\right〉$.

We previously discovered that in the case of evenly distributed expected key generation rates *γᵢ* ∈ (0,1] the solution of Eq. (7) was satisfactory. To explore this occasion we map the expected key generation rates to a population parameter n. In order to retain the statistical behavior of the initial parameter, the mapping should preferably be via a linear function. For the sake of convenience, we will keep the population parameter bounded within the unit segment [0,1]. This leaves us with two options: either let *γᵢ* = *n* or *γᵢ* = 1 - n. Let us settle on the former. The weight function then takes the following form ${\frac{\partial {W}_{i}}{\partial n}}^{\left(target\right)} = - \frac{1 - {e}^{- {ω}_{c} n} - {ω}_{c} {ne}^{- {ω}_{c} n}}{{n}^{2}} ,$

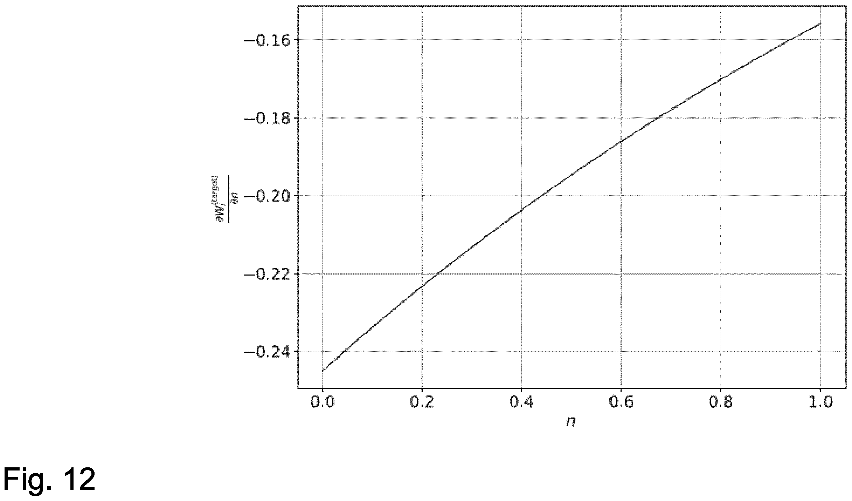

We plot this function in Fig. 12 as a function of the population parameter *n,* defining *ω_{c}* = 0.7. The plot shows the monotonic nature of this function. Our upcoming goal is to find a new expression for the weight function Eq. (11) so the new density function Eq. (12) will behave similarly to Eq. (13) for different distributions of expected key generation rates.

Let us figure out the relationship between the key generation rates and the population parameter n, ${γ}_{i} \left(n\right) = {e}^{- c ⋅ l \left(n\right)} = {e}^{- cR ⋅ \sqrt{n}} ,$ where *l* is the distance between the respective Bob and Alice standing in the center which cannot exceed the maximum allowed value of R kilometers, and c is the loss coefficient that equals 0.046*km*⁻¹. Here we simply assumed $n = \frac{{πl}^{2}}{{πR}^{2}}$.

Substituting Eq. (14) into Eq. (12) and assuming the left side equals Eq. (13), we arrive at the following expression for for weight function ***W̃*,** $\frac{\partial {{W}^{˜}}_{i}}{\partial {γ}_{i}} = \frac{1 - {e}^{- {ω}_{c} n} - {ω}_{c} {ne}^{- {ω}_{c} n}}{{n}^{2}} ⋅ \frac{2 \sqrt{n}}{cR} {e}^{cR ⋅ \sqrt{n}} .$

On the right side of Eq. (15), we substitute the parameter *γᵢ* back instead of n and arrive at ${{W}^{˜}}_{i} = - \int \frac{2 {\left(cR\right)}^{2}}{{γ}_{i} {ln}^{3} {γ}_{i}} \left[1-{γ}_{i}^{- {{ω}^{˜}}_{c} {lnγ}_{i}}-{{ω}^{˜}}_{c}{ln}^{2}\left({γ}_{i}\right){γ}_{i}^{- {{ω}^{˜}}_{c} {lnγ}_{i}}\right] {dγ}_{i} ,$ where *ω̃_{c} = ω_{c}*/(*cR*)².

Let us use the substitution *β* = ln²*γᵢ*, ${{W}^{˜}}_{i} = - {\left(cR\right)}^{2} \int \frac{1 - {e}^{- {{ω}^{˜}}_{c} β} - {{ω}^{˜}}_{c} {βe}^{- {{ω}^{˜}}_{c} β}}{{β}^{2}} dβ ,$

If we now look at Equations (16) and (17) we can immediately guess the antiderivative ${{W}^{˜}}_{i} = {\left(cR\right)}^{2} ⋅ \frac{1 - {e}^{- {{ω}^{˜}}_{c} β}}{β} + C ,$ or if we return to the original variables and omit the constant Cwe will get ${{W}^{˜}}_{i} = \frac{{\left(cR\right)}^{2}}{{ln}^{2} {γ}_{i}} \left[1-exp\left(-{W}_{cutoff}\times \left〈{γ}_{i}^{- 1}\right〉\frac{{ln}^{2} {γ}_{i}}{{\left(cR\right)}^{2}}\right)\right] ,$ which is reminiscent of Eq. (11) but for the substitution of *γᵢ* with $n = \frac{{ln}^{2} {γ}_{i}}{{\left(cR\right)}^{2}}$.

Alternatively, one can get the same result from the relation ${\frac{\partial {W}_{i}}{\partial n}}^{\left(target\right)} = \frac{\partial {W}_{i}}{\partial {γ}_{i}} = \frac{\partial {{W}^{˜}}_{i}}{\partial f \left({γ}_{i}\right)} ⋅ \frac{\partial f \left({γ}_{i}\right)}{\partial {γ}_{i}} ⋅ \frac{\partial {γ}_{i}}{\partial n}$

So all we have to do is merely substitute *γᵢ* with *f*(*γᵢ*) in the initial expression ${{W}^{˜}}_{i} \left({γ}_{i}\right) = {W}_{i} \left(f\left({γ}_{i}\right)\right) ,$ where $f \left({γ}_{i}\right) = \int {\left(\frac{\partial {γ}_{i}}{\partial n}\right)}^{- 1} {dγ}_{i} = n \left({γ}_{i}\right) .$

In our case *n*(*γᵢ*) = ln²*γᵢ*/(*cR*)² and we arrive at the similar expression as Eq. (19), ${{W}^{˜}}_{i} = {ln}^{- 2} {γ}_{i} \left[1-exp\left(-\frac{{W}_{cutoff} \times \left〈{ln}^{- 2}{γ}_{i}\right〉}{{ln}^{- 2} {γ}_{i}}\right)\right] ,$ where we omitted the overall factor (*cR*)² that, according to Eq. (1) would not affect the final key rates *L_{f}.*

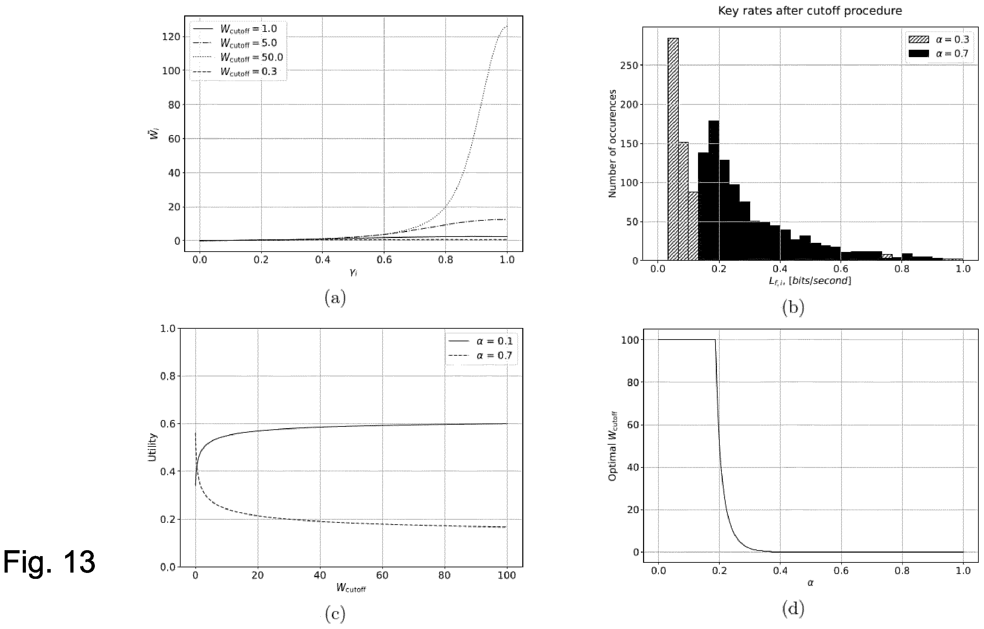

Fig. 13a shows a plot of Eq. (23) as a function of ${γ}_{i} ≡ \frac{{L}_{f}}{L} \left({r}_{E , i}\right)$ for different values of the cutoff parameter W_{cutoff}. A corresponding histogramm representing the distribution of users over their key generation rate is shown in Fig. 13b based on the weight function Eq. (23), again for the two values of the distribution parameter, *α* = 0.7 and *α =* 0.3. The setup of the sending unit and the receiving unit corresponds to the round city of radius R = 40 km as described above with reference to Fig. 9. The plots are built for a set of 1000 users with $\frac{{L}_{f}}{L} \left({r}_{E , i}\right) ∈ \left(0, 1\right]$ randomly placed in a circle of radius *R* = 40 km. The key generation rates are found according to the relation dictating the PLOB bound as a function of the distance from a center. For the sake of normalization, we set *Lₐ* equal to the number of Bobs, *Lₐ = N* × 1 s⁻¹.

Fig. 13c shows the corresponding utility function according to Eq. (9) as a function of the cutoff parameter W_{cutoff}, for two different values *α* = 0.3 and 0.7 of the distribution parameter. Fig. 13d shows the optimal value for *W*_{cutoff} which maximizes the utility function depending on the parameter *α.*

### (g) Allocation for Different Weight Functions

In the embodiment described above with reference to Figures 9 to 13, the weight function has been chosen as an exponential function in terms of the cut-off parameter W_{cutoff}, in accordance with Eq. (5) and Eq. (11). However, this is merely one example, and in general other weight functions may likewise be employed in the context of the present disclosure.

For instance, the weight function may be chosen in terms of a Heaviside step function, ${W}_{i} {γ}_{i} = Θ \left(-{γ}_{i}+x\right) \times {γ}_{i} \frac{1 - x}{x} + Θ \left({γ}_{i}-x\right) \times \left({γ}_{i}\frac{x}{1 - x}+\frac{1 - 2 x}{1 - x}\right) ,$ where Θ(*x*) is a Heaviside step function and we again use the shorthand notation ${γ}_{i} ≡ \frac{{L}_{f}}{L} \left({r}_{E , i}\right)$ for the sake of simplicity. The cut-off parameter *x* may again be determined by optimizing the respective utility function according to Eq. (7) and (8), where again the distribution parameter *α* ∈ [0, 1] is a continuous parameter that represents a preference for equality (*α =* 1) or for a larger total key rate (*α* = 0).

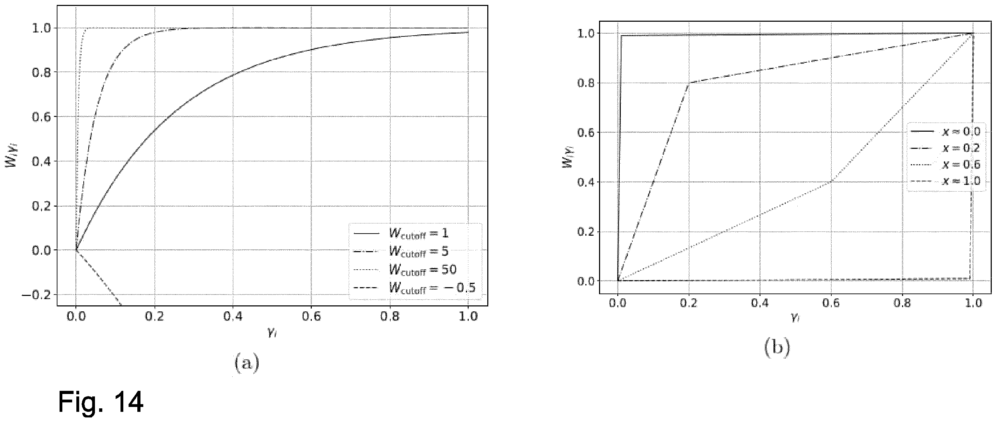

*Wᵢγᵢ* as a function of *γᵢ* is shown in Fig. 14a for the exponential function according to Eq. (5) for different choices of the cut-off parameter W_{cutoff}, and in Fig. 14b in comparison for the Heaviside-type function according to Eq. (24) for different choices of the parameter x.

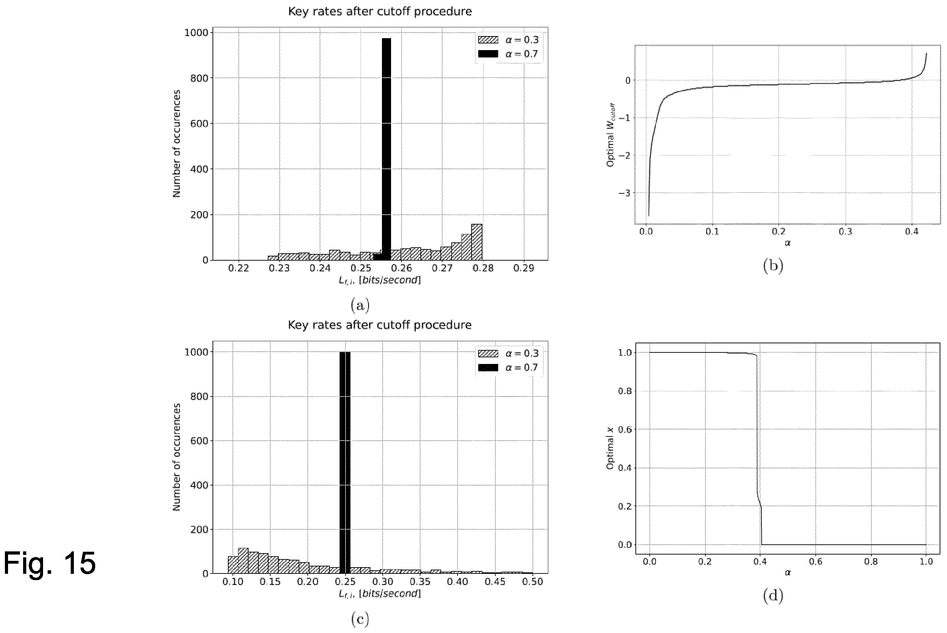

To trace the difference between these two choices of the weight function, for each of them we provide a graphical analysis in Figures 15a to 15d showing the impact the parameters have on the resulting distribution of key rates *L*_{*f*,*i*} and the cutoff-parameter. The respective histograms as a function of the key rates *L*_{*f*,*i*} are shown in Fig. 15a for the exponential function according to Eq. (5) and in Fig. 15c for the Heaviside-type function according to Eq. (24). The setup of the sending unit and the receiving unit again corresponds to the round city of radius R = 40 km as described above with reference to Fig. 9, where the initial distribution of users corresponds to the one depicted in Fig. 10a. The optimal cut-off parameters determined from the optimization according to Eq. (7) and (8) as a function of the distribution parameter *α* are shown in Fig. 15b for the exponential function according to Eq. (5) and in Fig. 15d for the Heaviside-type function according to Eq. (24).

We see from a comparison of Figures 15a, 15c that both weight function families lead to almost the same distribution of users over their key generation rates. We note that the choice of Eq. (5) does not correspond to a finite value of *W*_{cutoff} for each value of *α* ∈ [0,1]. On the contrary, the choice of the second family of weight functions according to Eq. (24) leads to a well-defined dependency between the optimal *x* parameter and *α* on the whole interval [0,1].

### (h) Adjusted Operation to Eliminate Excessive Key Sharing

Another challenge encountered in some communication scenarios is excessive key sharing. This may happen if, during the transmission cycle, Alice 12 will fully fulfill the request(s) of one or several users Bobᵢ 14ᵢ before the next KAT recalculation. In this case, a portion of the shared secret key may be redundant, and it may be preferable to redistribute the bandwidth surplus to the users who truly need it at the moment.

This goal may be achieved with the following adjustment of the algorithm: At first, we sort the list of Bobs 14ᵢ in increasing order of time needed to fulfill their data request with the current data transfer rate *τᵢ = Dᵢ*/*L_{f,i}.* So the first table row is occupied by *Bob*_{*s*₁} with the smallest projected time, while the last row is occupied by *Bob_{s_{N}}* with the largest projected time. Here, permutation s represents the ordering in the key allocation table (KAT). Then we introduce two new columns to the KAT. In the first additional column, we put the projected bandwidth needed to transfer all requested data to the corresponding user during *T_{KAT},* ${L}_{i}^{proj} = \frac{{D}_{i}}{{T}_{KAT}} {\left[\frac{{L}_{f}}{L}\left({r}_{E , i}\right)\right]}^{- 1} .$

If the first user's projected bandwidth is larger than his "fair share," we only assign each user's "fair share" as the final bandwidth distribution. Otherwise, if the first user's projected bandwidth is smaller than his "fair share" ( ${L}_{i}^{proj} < {L}_{i}^{∗ , fair}$), we allocate the total projected bandwidth to this user and recalculate other users' "fair share" according to ${L}_{i}^{* * , fair} = \left({L}_{a}-{L}_{{s}_{1}}^{proj}\right) \frac{{W}_{i}}{{\sum }_{j \neq {s}_{1}} {W}_{j}} ,$ where the first user in the list of users sorted by the number of bits requested (denoted by *s*₁) is excluded from the summation in the denominator.

If the second user's projected bandwidth is greater than the updated "fair share," we assign the latest "fair share" values as final for each remaining user. If the second user's projected bandwidth happens to be smaller than his newly updated "fair share" ${L}_{i}^{proj} < {L}_{i}^{* * , fair}$ then again we allocate the total projected bandwidth to this user and recalculate other users' "fair share" similarly to Eq. (26), ${L}_{i}^{* * * , fair} = \left({L}_{a}-{L}_{{s}_{1}}^{proj}-{L}_{{s}_{2}}^{proj}\right) \frac{{W}_{i}}{{\sum }_{j \neq {s}_{1} , {s}_{2}} {W}_{j}} ,$

The procedure outlined above may continue until it reaches the last user. If the last user's "fair share" exceeds his projected bandwidth, we divide the surplus evenly over all users and add it to their pulse frequencies.

An example KAT for three users is illustrated in the following Table. Here we assume *T_{KAT} =* 1s and *Lₐ* = 1000*Hz.*

| *User* | *Requested data* | *Expected key generation rate* | *User's "fair" bandwidth share* | *Projected bandwidth needed to transfer all requested data* | *Updated "fair share"* | *Final allocated bandwidth share* |
|---|---|---|---|---|---|---|
| | *Dᵢ*, bits | $\frac{{L}_{f}}{L} \left({r}_{E , i}\right)$ | ${L}_{i}^{∗ , fair}$ , Hz | $\frac{{D}_{i}}{{T}_{KAT}} {\left[\frac{{L}_{f}}{L}\left({r}_{E , i}\right)\right]}^{- 1} ,$ Hz | ${L}_{i}^{∗ ∗ , fair}$ , Hz | ${L}_{i}^{∗ … ∗}$ , Hz |
| Bob2 | 17 | 0.059 | 471 | 290 | 290 | 290 |
| Bob1 | 322 | 0.111 | 251 | 2911 | 336 | 336 |
| Bob3 | 1.03 · 10¹⁶ | 0.100 | 278 | 1.03 · 10¹⁷ | 374 | 374 |

Once more, the final frequencies of pulses that will go to the corresponding recipients will generally account for all service pulses, ${L}_{i} = {L}_{i}^{∗ ∗ … ∗ , fair} + {L}_{i , min}$

### (i) Flow Diagram

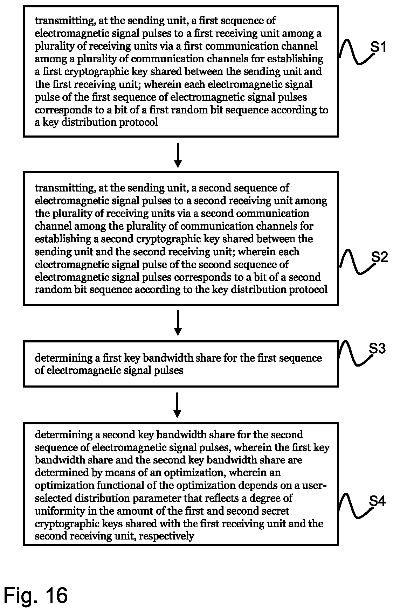

Fig. 16 is a flow diagram illustrating a method for establishing a plurality of secret cryptographic keys between a sending unit and a plurality of receiving units according to an embodiment, wherein the sending unit is connected to the plurality of receiving units by a plurality of communication channels.

In a first step S1, a first sequence of electromagnetic signal pulses is transmitted, at a sending unit, to a first receiving unit among a plurality of receiving units via a first communication channel among a plurality of communication channels for establishing a first cryptographic key shared between the sending unit and the first receiving unit, wherein each electromagnetic signal pulse of the first sequence of electromagnetic signal pulses corresponds to a bit of a first random bit sequence according to a key distribution protocol.

In a second step S2, a second sequence of electromagnetic signal pulses is transmitted, at the sending unit, to a second receiving unit among the plurality of receiving units via a second communication channel among the plurality of communication channels for establishing a second cryptographic key shared between the sending unit and the second receiving unit, wherein each electromagnetic signal pulse of the second sequence of electromagnetic signal pulses corresponds to a bit of a second random bit sequence according to the key distribution protocol.

In a third step S3, a first key bandwidth share is determined for the first sequence of electromagnetic signal pulses.

In a fourth step S4, a second key bandwidth share for the second sequence of electromagnetic signal pulses is determined, wherein the first key bandwidth share and the second key bandwidth share are determined by means of an optimization, wherein an optimization functional of the optimization depends on a user-selected distribution parameter that reflects a degree of uniformity in the amount of the first and second secret cryptographic keys shared with the first receiving unit and the second receiving unit, respectively.

While the flow diagram of Fig. 16 necessarily shows the steps S1 to S4 in a certain time order, it will be understood by those skilled in the art that the present disclosure is not limited to a specific time order, and that the order of the method steps may be changed. For instance, the steps of transmitting the first electromagnetic signal pulse to the first receiving unit and determining the first key bandwidth share may both take place before the second electromagnetic signal pulse is transmitted to the second receiving unit, and before the second key bandwidth share is determined.

The examples described above and the Figures merely serve to illustrate the techniques of the present disclosure, but should not be understood to imply any limitation. The scope of the disclosure is defined by the appended claims.

### Reference Signs

| | |
|---|---|
| 10, 10' | communication system |
| 12 | sending unit |
| 14₁, 14₂, ..., 14_{N} | receiving units |
| 16₁, 16₂, ..., 16_{N} | communication channels |
| 18 | optical switch |

## Claims

1. A method for establishing a plurality of secret keys shared between a sending unit (12) and a plurality of receiving units (14₁, 14₂, ..., 14_{N}), wherein the sending unit (12) is connected to the plurality of receiving units (14₁, 14₂, ..., 14_{N}) by a plurality of communication channels (16₁, 16₂, ..., 16_{N}), the method comprising:
transmitting, at the sending unit (12), a first sequence of electromagnetic signal pulses to a first receiving unit (14₁, 14₂, ..., 14_{N}) among the plurality of receiving units via a first communication channel (16₁, 16₂, ..., 16_{N}) among the plurality of communication channels for establishing a first cryptographic key shared between the sending unit (12) and the first receiving unit (14₁, 14₂, ..., 14_{N});
wherein each electromagnetic signal pulse of the first sequence of electromagnetic signal pulses corresponds to a bit of a first random bit sequence according to a key distribution protocol;
transmitting, at the sending unit (12), a second sequence of electromagnetic signal pulses to a second receiving unit (14₁, 14₂, ..., 14_{N}) among the plurality of receiving units via a second communication channel (16₁, 16₂, ..., 16_{N}) among the plurality of communication channels for establishing a second cryptographic key shared between the sending unit (12) and the second receiving unit (14₁, 14₂, ..., 14_{N});
wherein each electromagnetic signal pulse of the second sequence of electromagnetic signal pulses corresponds to a bit of a second random bit sequence according to the key distribution protocol;
determining a first key bandwidth share for the first sequence of electromagnetic signal pulses; and
determining a second key bandwidth share for the second sequence of electromagnetic signal pulses;
wherein the first key bandwidth share and the second key bandwidth share are determined by means of an optimization, wherein an optimization functional of the optimization depends on a user-selected distribution parameter that reflects a degree of uniformity in the amount of the first and second secret cryptographic keys shared with the first receiving unit (14₁, 14₂, ..., 14_{N}) and the second receiving unit (14₁, 14₂, ..., 14_{N}), respectively.

2. The method according to claim 1, wherein determining the first key bandwidth share comprises assigning a first bandwidth weight pertaining to the first sequence of electromagnetic signal pulses, and wherein determining the second key bandwidth share comprises assigning a second bandwidth weight pertaining to the second sequence of electromagnetic signal pulses, wherein, optionally, the first bandwidth weight is selected as a function of a first key generation rate for the first sequence of electromagnetic signal pulses and/or as a function of a second key generation rate for the second sequence of electromagnetic signal pulses, and/or wherein, optionally, the second bandwidth weight is selected as a function of a first key generation rate for the first sequence of electromagnetic signal pulses and/or as a function of a second key generation rate for the second sequence of electromagnetic signal pulses.

3. The method according to claim 2, wherein the first bandwidth weight and the second bandwidth weight are assigned to be no larger than a first maximum weight and no larger than a second maximum weight, respectively.

4. The method according to claim 3, wherein the second maximum weight is equal to the first maximum weight.

5. The method according to claim 3 or 4, wherein the first maximum weight is selected as a function of a first key generation rate for the first sequence of electromagnetic signal pulses, and/or wherein the second maximum weight is selected as a function of a second key generation rate for the second sequence of electromagnetic signal pulses.

6. The method according to claim 5, wherein the first maximum weight is proportional to an inverse of the first key generation rate for the first sequence of electromagnetic signal pulses, and/or wherein the second maximum weight is proportional to an inverse of the second key generation rate for the second sequence of electromagnetic signal pulses.

7. The method according to claim 5 or 6, wherein the first maximum weight and/or the second maximum weight are proportional to an average of the inverse of a plurality of key generation rates pertaining to the plurality of receiving units.

8. The method according to any one of the claims 2 to 7, wherein the first bandwidth weight comprises an exponential function of the first key generation rate and/or the second key generation rate, and/or wherein the first bandwidth weight comprises an exponential function of an average of the inverse of a plurality of key generation rates pertaining to the plurality of receiving units.

9. The method according to any one of the claims 2 to 8, wherein the first bandwidth weight comprises a Heaviside step function of the first key generation rate and/or the second key generation rate.

10. The method according to any one of the preceding claims, wherein the optimization functional comprises a Gini coefficient, in particular a Gini coefficient based on at least a first amount of the first cryptographic key shared between the sending unit (12) and the first receiving unit (14₁, 14₂, ..., 14_{N}), and a second amount of the second cryptographic key shared between the sending unit (12) and the second receiving unit (14₁, 14₂, ..., 14_{N}).

11. The method according to any one of the preceding claims, wherein the optimization functional is given in terms of at least a first key generation rate for the first sequence of electromagnetic signal pulses and a second key generation rate for the second sequence of electromagnetic signal pulses.

12. The method according to any one of the preceding claims, further comprising receiving, at the sending unit (12), a first cryptographic key request from the first receiving unit (14₁, 14₂, ..., 14_{N}) and/or receiving, at the sending unit (12), a second cryptographic key request from the second receiving unit (14₁, 14₂, ..., 14_{N}).

13. The method according to any one of the preceding claims, further comprising iterating the method steps in a plurality of communication rounds according to the key distribution protocol.

14. A computer program comprising computer-readable instructions which, when executed by a computer, cause the computer to carry out a method according to any one of the preceding claims.

15. A communication system (10) comprising means adapted to implement a method according to any one of the claims 1 to 13.
